Europäisches Patentamt

(19) European Patent Office

Office européen des brevets

(11) Publication number: **0 003 429**
**B1**

(12) **EUROPEAN PATENT SPECIFICATION**

(45) Date of publication of patent specification: **09.06.82**　(51) Int. Cl.³: **C 01 D 3/08**

(21) Application number: **79300122.3**

(22) Date of filing: **24.01.79**

(54) Production of alkali metal chlorides.

(30) Priority: **26.01.78 GB 328178**

(43) Date of publication of application:
**08.08.79 Bulletin 79/16**

(45) Publication of the grant of the patent:
**09.06.82 Bulletin 82/23**

(84) Designated Contracting States:
**BE DE FR GB IT NL**

(56) References cited:
**DE - A - 1 914 311**
**DE - C - 326 620**
**DE - C - 390 793**

(73) Proprietor: **LONRHO LIMiTED**
**Cheapside House, 138 Cheapside**
**London EC2V 6BL (GB)**

(72) Inventor: **Dyson, Peter**
**6 Carr Close**
**Rawdon Near Leeds West Yorkshire (GB)**
Inventor: **Grimshaw, Rex William**
**"Rockfield" New Road Side**
**Rawdon Near Leeds West Yorkshire (GB)**

(74) Representative: **Hose, Cyril Gustav Bidwell et al,**
**Baron & Warren 18 South End Kensington**
**London W8 5BU (GB)**

Courier Press, Leamington Spa, England.

# 0 003 429

## Production of Alkali Metal Chlorides

This invention relates to the production of an alkali metal chloride from materials comprising an alkali metal aluminosilicate. Of particular interest is the production of potassium chloride from naturally occurring and waste materials comprising a potassium aluminosilicate.

Potassium is one of the most common elements present in the crust of the earth. It occurs in varying proportions in a wide variety of minerals. Only a small number of such deposits are workable however. These are deposits of potassium chloride with sodium chloride and/or water-soluble magnesium compounds which have been formed by the evaporation of prehistoric lakes. Such deposits occur for example at Stassfurt, Alsace, in the Ural Mountains and at Searles Lake, California. Such deposits are worked by mining by conventional underground methods or by solution mining, followed by appropriate and treatment depending upon the intended use of the crude material. Thus the potassium content may be raised by leaching the product with hot water and crystallising the resulting solution. Alternatively separation of finely divided material slurried in water and aerated in the presence of fatty acid amines is reported to be capable of producing material 97% pure.

Deposits comprising potassium chloride are, at the present time, the only ones which have been extensively worked and since the extent thereof is limited, the composition variable and the demand for potassium and its salts is constantly increasing it would be desirable to develop alternative sources of compounds containing this important element in or near the major consuming countries.

Amongst the available minerals containing potassium there are a number of minerals which may be designated as alkali metal aluminosilicates and amongst these are several in which the predominating alkali metal is potassium. These are potential sources of potassium. It is accordingly one object of the invention to provide a method by which the potassium or other alkali metal present in such minerals may be substantially wholly made available in soluble form.

The present invention provides a process for the production of an alkali metal chloride by the reaction between an alkali metal alumino-silicate and calcium and/or magnesium chloride characterised in that a mixture of said aluminosilicate in finely divided form and calcium and/or magnesium chloride in hydrated form, and a minor proportion, relative to said calcium and/or magnesium chloride, of sodium chloride, is first prepared, that the said mixture is then heated at a temperature of from 700°C to 1050°C for a period of 0.3 to 2.0 hours, to effect substantial conversion of the aluminosilicate to a liquid reaction product from which product a glass is obtainable upon cooling and that the reaction product is then cooled and leached with water to produce an aqueous solution of said alkali metal chloride.

The preferred starting materials are the potassium aluminosilicates which include the potassium feldspars, the potassium feldspathoids (leucite) and the potassium micas. The potassium feldspars include orthoclase and microcline: they are common in igneous and metamorphic rocks and in feldspathic shales. These feldspars may contain small proportions of sodium and some iron. However in a potassium feldspar the potassium content, on a molar or weight basis, is much greater than that of sodium. Leucite is another potassium aluminosilicate which has however a higher proportion of alumina and $K_2O$ relative to silica than the potassium feldspars. The potassium micas are materials such as white mica or muscovite. Such micas contain free hydroxyl groups and correspond substantially to the formula $KA1_2A1Si_3O_{10}(OH)_2$. The feldspathic shales of interest are those in which the rock is wholly or preponderantly a potassium feldspar.

In addition to the above naturally occurring materials certain by-products are available in industry in large quantities which comprise aluminosilicates and which are a potential source of postassium. The most important of these is fly ash obtained by the combustion of coal principally from electricity generating stations: other potential sources are peat ash, wood ash and colliery waste.

The aluminosilicate materials are used in a finely divided form. It is presently preferred to use a material which passes a No. 16 British Standard Sieve. Finer material such as a material substantially all of which passes a No. 60 or a No. 150 British Standard Sieve can be used but such a degree of fineness has been found not to be necessary for the present purpose. For this purpose the minerals require to be ground but fly ash is sufficiently fine as it is.

With regard to the calcium chloride which may be used large quantities of this are available as a waste product, for example, the effluent from the Solvay process for the manufacture of sodium carbonate from sodium chloride and calcium carbonate. This effluent is a mixture of calcium chloride with a minor proportion of sodium chloride. This material is frequently available as an aqueous solution which can be made into a slurry with the finely divided potassium or other alkali metal aluminosilicate and then dried to give a mixture of the aluminosilicate used with sodium chloride and hydrated calcium chloride. Mixtures of sodium chloride and hydrated calcium chloride fuse at lower temperatures than does either salt when pure and this enables the desired reaction between calcium chloride and potassium or other alkali metal aluminosilicate to commence at a lower temperature than it would in the absence of sodium chloride.

Regarding the magnesium chloride hydrate which may also be used, substantial quantities of this

2

are available in certain localities in the form of bitters, a residue obtained in the production of solar salt.

If desired, hydrates of calcium and magnesium chlorides may be used in admixture, e.g. as Solvay effluent admixed with bitters.

Varying proportions of calcium and/or magnesium chloride to the aluminosilicate material have been used. The best results have been obtained when equal proportions by weight of calcium chloride, reckoned as the dihydrate, and aluminosilicate are used. Whilst larger proportions of hydrated calcium chloride relative to aluminosilicate can be used, e.g. 1.20 proportions by weight, there appears to be no advantage and the presence of the additional unreacted calcium and/or magnesium chloride in the aqueous solution obtained on leaching the reaction product may constitute a disadvantage. To obtain a good recovery of alkali metal chlorides it appears necessary to use at least 80% by weight of calcium chloride dihydrate based upon the aluminosilicate material used.

The reaction which occurs is a quite vigorous one with formation of a liquid phase. At elevated temperatures alkali metal is lost as alkali metal chloride and consequently heating should be discontinued when a sufficient conversion has occurred. The minimum practical temperature for most materials is 800°C but as this will require a relatively long heating period temperatures of 900 to 1000°C are preferred. In the case of fly ash somewhat lower temperatures can be used and the minimum practical temperature is 700°C. It should be appreciated that the finer the starting material the more rapid is the reaction and the greater the loss by volatilisation if the reaction mixture is overheated. Accordingly to obtain maximum recovery of alkali metal in solution, particle size, temperature of heating and heating time should be correlated. For example, doubling the heating time without reducing the temperature may result in the loss of as much as one-third of the potassium chloride produced due to volatilisation. A heating time of 30 minutes at 1000°C has been found to be a useful one using equal weights or raw feed stock and pure calcium chloride dihydrate. However longer heating periods will result in loss by volatilisation at this temperature. A heating time of one hour at 900°C also gives useful results using equal weights of starting materials and has been found to produce a calcium compound or compounds which is/are less soluble in water than the calcium compound or compounds produced at 1000°C. A convenient range of times and temperatures is from 850—1050°C with times of from 0.3 to 2 hours the shorter times being used with the higher temperatures and vice-versa.

Calcium chloride melts at 772°C and magnesium chloride at 704°C and it is believed that this fact has a bearing upon the nature of the reaction which takes place. An attempt to replace a part of the calcium chloride by calcium carbonate was unsuccessful and actually led to a diminution in the yield of potassium chloride when reactions were carried out under the same conditions. The results obtained showed that crushed calcium carbonate merely acted as a diluent under the conditions envisaged and played no other part in the reaction. Sodium chloride, because it forms eutectic mixtures, is of benefit in reducing reaction temperatures.

After the reaction has taken place the reaction mixture is then cooled and leached with water. The product may be broken up into small pieces before leaching is undertaken or it may be quenched. The water used for leaching may be at a superambient temperature. When substantial quantities of material are to be leached this may be carried out as a countercurrent operation. The reaction between alkali metal aluminosilicates and calcium and/or magnesium chloride occurs with all the alkali metals. If the material is high in lithium (such as spodumene), rubidium and/or caesium (such as pollucite), alumino-silicates these metals may be released and recovered as the chlorides by the same process as that used for the more commonly occurring potassium.

The concentration of alkali metal chloride in the aqueous leach liquors may be increased by evaporation of the liquors by heating with or without vacuum. Owing to the much greater solubility of calcium chloride than the alkali metal chlorides, the latter crystallises first and may be separated by fractional crystallisation. If these crystals are then separated and the liquors obtained cooled, calcium chloride crystallises and may then be separated: it is suitable for use in treating a further batch of aluminosilicate material.

Separation of individual alkali metal chlorides in crystalline form may also be effected by froth flotation employing a reagent such as a sulphonated long chain fatty alcohol which imparts hydrophobic properties to them in varying degrees.

The process of the invention will now be illustrated by certain Experiments and Examples. In Experiments A—D five different kinds of material containing potassium alumino-silicates were tested: these are set out in Table I.

Table I

| Rock mineral | Total K$_2$O equivalent content % |
|---|---|
| Microcline | 8.3 |
| Muscovite Mica | 9.3 |
| Rhyolite 1 | 4.6 |
| Rhyolite 2 | 2.9 |
| Fly ash | 4.2 |

The first four of these materials were crushed in an impact mill to provide batches of material to the following classification:
Grade A: Passed a No. 16 mesh
Grade B: Passed a No. 60 mesh
Grade C: Passed a No. 150 mesh
All meshes used were British Standard Meshes.

Experiment A

Mixtures of microcline and calcium chloride dihydrate in different ratios by weight were investigated. The mixtures were first prepared as an aqueous slurry, dried and then heated to 900°C for the time indicated in Table II, the product cooled and leached with water. The potassium content of the leach liquors was then estimated by flame photometry and/or by atomic absorption. The following results were obtained.

Table II

Potash recovery from microcline as a function of firing time, size distribution and mineral: CaCl$_2$.2H$_2$O ratio at a firing temperature of 900°C

| Firing time (hours) | Sample | Mineral: CaCl$_2$.2H$_2$O ratio | % Yield of K$_2$O extracted |
|---|---|---|---|
| 0.5 | A | 5:2.5 | 43.5 |
| 0.5 | B | 5:2.5 | 49.3 |
| 0.5 | C | 5:2.5 | 51.5 |
| 0.5 | A | 5:5 | 73.9 |
| 0.5 | B | 5:5 | 75.4 |
| 0.5 | C | 5:5 | 88.5 |
| 1 | A | 5:2.5 | 41.3 |
| 1 | B | 5:2.5 | 42.0 |
| 1 | C | 5:2.5 | 52.2 |
| 1 | A | 5:5 | 84.1 |
| 1 | B | 5:5 | 87.0 |
| 1 | C | 5:5 | 88.5 |
| 2 | A | 5:2.5 | 28.3 |
| 2 | B | 5:2.5 | 21.6 |
| 2 | C | 5:2.5 | 27.7 |
| 2 | A | 5:5 | 66.3 |
| 2 | B | 5:5 | 66.3 |
| 2 | C | 5:5 | 60.2 |

Experiment B

Experiment A was repeated again using microcline as the source of potassium but heating to 1000°C for the times indicated in Table III. The potassium content was estimated as before. The following results were obtained.

4

# 0 003 429

Table III
Potash recovery from microcline as a function of firing time, size distribution and mineral: $CaCl_2.2H_2O$
ratio at a firing temperature of 1000°C

| Firing time (hours) | Sample | Mineral: $CaCl_2.2H_2O$ ratio | % Yield of $K_2O$ extracted |
|---|---|---|---|
| 0.5 | A | 5:2.5 | 43.5 |
| 0.5 | B | 5:2.5 | 49.3 |
| 0.5 | C | 5:2.5 | 43.5 |
| 0.5 | A | 5:5 | 89.9 |
| 0.5 | B | 5:5 | 100.0 |
| 0.5 | C | 5:5 | >100.0 |
| 1 | A | 5:2.5 | 41.3 |
| 1 | B | 5:2.5 | 42.0 |
| 1 | C | 5:2.5 | 42.7 |
| 1 | A | 5:5 | 82.6 |
| 1 | B | 5:5 | 91.3 |
| 1 | C | 5:5 | 92.8 |

Experiment C

Mixtures of the other materials listed in Table 1 with calcium chloride dihydrate were tested at 900°C and 1000°C, the procedure being the same as that adopted in Experiments A and B.

Table IV
Potassium release from other minerals

| Rock/Mineral | Sample grading | 900°C/1 hour % yield of $K_2O$ | 1000°C/0.5 hour % yield of $K_2O$ |
|---|---|---|---|
| Mica | A | 85.5 | 97.3 |
| | B | 98.2 | 99.2 |
| | C | 82.5 | 94.3 |
| Rhyolite 1 | A | 72.4 | 92.8 |
| | B | 78.3 | 98.1 |
| | C | 64.2 | 82.4 |
| Rhyolite 2 | A | 88.6 | 94.8 |
| | B | 92.4 | 99.3 |
| | C | 70.2 | 75.2 |
| Fly ash | | 70.4 | 92.8 |

The above results show that calcium chloride dihydrate is an effective reagent in the liquid phase for converting the potassium content of potassium alumino-silicates into a soluble potassium compound which is then recovered by leaching with water. Whilst heating to 1000°C for 0.5 hour gave a higher recovery than heating to 900°C for 1.0 hour surprisingly the coarser particulate material gave a higher recovery than the finer materials employed. This is attributed to volatilisation or possible loss as dust from the reaction melt or both.

Experiment D

It has been indicated that when the reaction is carried out at 1000°C more water-soluble calcium is present in the leached product than when the reaction is carried out at 900°C for a longer time. This is illustrated by the following tests. The material used was microcline grade C. Equal weights of this material and calcium chloride dihydrate were heated to 900°C for 1 hour and 1000°C for 0.5 hour respectively. The leach liquors were analysed to determine the contents of potassium chloride and calcium chloride per unit volume. The following results were obtained.

Table V
Analyses of aqueous leach liquors

| | Microcline "C" 900°C/1 hour | Microcline "C" 1000°C/$\frac{1}{2}$ hour |
|---|---|---|
| % K$_2$O Yield | 88.5% | 100% |
| KCl Content in solution | 0.58 g | 0.63 g |
| CaCl$_2$ Content in solution | 0.73 g | 0.96 g |

It will be seen that an increase of about 12% by weight in the potassium chloride extracted by the leach liquors is accompanied by an increase of over 31% in the calcium chloride extracts. This suggests that more than one reaction is taking place and that the rates of the reactions differ.

Experiment E

Mixtures of crushed muscovite mica and calcium chloride dihydrate in different ratios by weight were investigated. The mixtures were prepared as aqueous slurries, dried and then heated to the indicated temperatures, the product cooled and leached with water. The potassium content of the leach liquors was estimated by flame photometry. The following results were obtained.

Table VI
Potassium recovery from muscovite mica

| Temperature °C | Firing time (hours) | Mineral: CaCl$_2$.2H$_2$O | % Yield of K$_2$O extracted |
|---|---|---|---|
| 700 | 1 | 5:2 | 20.5 |
| 700 | 1 | 5:4 | 15.8 |
| 700 | 1 | 4:5 | 24.7 |
| 700 | 1 | 5:8 | 26.9 |
| 800 | 1 | 5:2 | 61.2 |
| 800 | 1 | 5:4 | >60.7 |
| 800 | 1 | 4:5 | 54.2 |
| 800 | 1 | 5:8 | 60.6 |
| 900 | 1 | 5:4 | 88.2 |
| 900 | 1 | 4:5 | 94.6 |
| 900 | 1 | 5:8 | 94.9 |
| 1000 | 0.5 | 5:2 | 55.0 |
| 1000 | 0.5 | 5:4 | 91.1 |
| 1000 | 0.5 | 4:5 | 100.0 |
| 1000 | 0.5 | 5:8 | 100.0 |

The crushed mica used passed a No. 60 mesh.

Example 1

As previously pointed out Solvay effluent normally consists of a mixture of calcium chloride and sodium chloride. The sodium chloride content may approximate that of a eutectic mixture of minimum melting point when evaporated to dryness. Using samples of the same muscovite as that used in Experiment E a series of mixtures were prepared containing 50.79% by weight of the muscovite, 32.5% by weight of anhydrous calcium chloride (supplied as dihydrate) and 15.8% by weight of sodium chloride. The following results were obtained.

Table VII

| Temperature °C | Firing time (hours) | % Yield of K$_2$O Extracted |
|---|---|---|
| 600 | 1 | 4.2 |
| 700 | 1 | 19.1 |
| 800 | 1 | 69.1 |
| 900 | 1 | 99.5 |
| 1000 | 0.5 | 100.0 |

The pH of the leach liquor in the last run was 5.0. The recorded yield of greater than 100% in the last run is attributed to interference from other ions in the procedures used.

6

## 0 003 429

Experiment F

Another sample of fly ash was used which analysed (average of two analyses) 3.08% by weight of potassium. No grinding was necessary. Mixtures were prepared by slurrying the ash with calcium chloride dihydrate, drying and then heating to the indicated temperatures, the product cooled and leached with water. The potassium content of the leach liquors was estimated. The following results were obtained.

Table VIII
Potassium recovery from fly ash

| Temperature °C | Firing time (hours) | Mineral: CaCl$_2$.2H$_2$O | % Yield of K$_2$O extracted |
|---|---|---|---|
| 700 | 1 | 5:2 | 35.1 |
| 700 | 1 | 5:4 | 33.1 |
| 700 | 1 | 4:5 | 36.7 |
| 700 | 1 | 5:8 | 30.5 |
| 800 | 1 | 5:2 | 51.6 |
| 800 | 1 | 5:4 | 61.3 |
| 800 | 1 | 4:5 | 59.1 |
| 800 | 1 | 5:8 | 62.6 |
| 900 | 1 | 5:2 | 64.3 |
| 900 | 1 | 5:4 | 79.5 |
| 900 | 1 | 4:5 | 77.9 |
| 900 | 1 | 5:8 | 80.8 |
| 1000 | 0.5 | 5:2 | 63.0 |
| 1000 | 0.5 | 5:4 | 82.8 |
| 1000 | 0.5 | 4:5 | 84.7 |
| 1000 | 0.5 | 5:8 | 81.8 |

When the fly ash is present in a substantial excess by weight decomposition is evidently incomplete but when the excess does not exceed 25% by weight, good recoveries of the potassium values are feasible. It is to be borne in mind that the potassium is almost certainly combined in several different kinds of compounds, including silicates, in fly ash and the conditions employed are those which will ensure reaction of the potassium aluminosilicates present.

Example 2

Experiments similar to those reported under Example 1 were carried out using fly ash. The mixtures used contained 50.7% by weight of fly ash, 32.5% by weight of anhydrous calcium chloride (supplied as dihydrate) and 15.8% by weight of sodium chloride. The following results were obtained.

Table IX

| Temperature °C | Firing time (hours) | % Yield of K$_2$O (extracted) |
|---|---|---|
| 600 | 1 | 51.0 |
| 700 | 1 | 68.3 |
| 800 | 1 | 77.6 |
| 900 | 1 | 84.7 |
| 1000 | 0.5 | 84.7 |

In this case a substantial yield was obtained on heating to 600°C for one hour.

Example 3

A sample of spodumene which passed a No. 60 British Standard Mesh was heated with a mixture of calcium chloride dihydrate and a minor proportion, relative to the calcium chloride, of sodium chloride. Spodumene and the calcium chloride were used in the proportion of equal amounts by weight. This mixture was heated at 1000°C for 0.5 hour, cooled and leached with water. The resulting solution contained 31.9% of the lithium present in the starting material in the form of lithium chloride.

Example 4

A sample of muscovite mica which passed a No. 60 British Standard Mesh was heated with a mixture of hydrated magnesium chloride and a minor proportion, relative to the magnesium chloride, of sodium chloride. The mica and the magnesium chloride were used in equal amounts by weight. This

7

mixture was heated at 1000°C for 0.5 hour, cooled and leached with water. The resulting solution contained 44.5% of the potassium present in the starting material in the form of potassium chloride.

It will be appreciated from the above that this invention enables materials which are at present regarded as waste materials to be utilised as a source of potassium and other alkalies. The potassium-containing material may be an ash derived by the conbustion of a carbonaceous material. The calcium chloride and sodium chloride-containing material may be Solvay effluent of which large quantities are at present available wherever sodium carbonate is manufactured by the Solvay process. Thus the invention provides the opportunity to use two different kinds of waste materials to produce a material—e.g. a potassium salt solution, for which there are many uses.

## Claims

1. A process for the production of an alkali metal chloride by the reaction between an alkali metal aluminosilicate and calcium and/or magnesium chloride characterised in that a mixture of said alumino-silicate in finely divided form and calcium and/or magnesium chloride in hydrated form, and a minor proportion, relative to said calcium and/or magnesium chloride, of sodium chloride, is first prepared, that the said mixture is then heated at a temperature for from 700°C to 1050°C for a period of 0.3 to 2.0 hours, to effect substantial conversion of the aluminosilicate to a liquid reaction product from which product a glass is obtainable upon cooling and that the reaction product is then cooled and leached with water to produce an aqueous solution of said alkali metal chloride.

2. A process as claimed in claim 1, further characterised in that said mixture is heated at a temperature below that at which marked volatilisation of the alkali metal chloride to be produced occurs.

3. A process as claimed in either of claims 1 or 2, further characterised in that said alkali metal aluminosilicate is fly ash.

4. A process as claimed in any of claims 1 to 3, further characterised in that said mixture is prepared in the form of an aqueous slurry of said alkali metal aluminosilicate in said chlorides, that said slurry is then dried and therafter heated to form said liquid reaction product.

5. A process as claimed in any of claims 1 to 3, further characterised in that said mixture is prepared in the form of a slurry of said alkali metal aluminosilicate in Solvay effluent from the manufacture of sodium carbonate from sodium chloride and calcium carbonate, that said slurry is then dried and thereafter heated to form said liquid reaction product.

6. A process as claimed in any of claims 1 to 3, further characterised in that said mixture is prepared in the form of a slurry of said alkali metal aluminosilicate in bitterns, that said slurry is then dried and thereafter heated to form said liquid reaction product.

7. A process as claimed in any of claims 1 to 4, further characterised in that the proportion of hydrated calcium chloride relative to said aluminosilicate is at least 80% by weight reckoned as calcium chloride dihydrate.

## Patentansprüche

1. Verfahren zur Herstellung eines Alkalichlorids durch Umsetzen eines Alkalialuminiumsilikats mit Calcium- und/oder Magnesiumchlorid, dadurch gekennzeichnet, daß zunächst ein Gemisch des Aluminiumsilikats in fein zerteilter Form mit Calcium- und/oder Magnesiumchlorid in hydratisierter Form und einem geringen Anteil, bezogen auf das Calcium- und/oder Magnesiumchlorid, an Natriumchlorid hergestellt wird, dieses Gemisch dann 0,3 bis 2,0 Stunden auf eine Temperatur von 700°C bis 1050°C erhitzt wird, so daß ein wesentlicher Teil des Aluminiumsilikats zu einem flüssigen Reaktionsprodukt, aus dem durch Kühlen ein Glas erhalten werden kann, umgesetzt wird, und daß dieses Reaktionsprodukt dann gekühlt und mit Wasser ausgelaugt wird, so daß eine wäßrige Lösung das Alkalichlorids erzeugt wird.

2. Verfahren nach Anspruch 1, dadurch gekennzeichnet, daß das Gemisch auf eine Temperatur unter derjenigen, bei der eine merkliche Verflüchtigung des herzustellenden Alkalichlorids erfolgt, erhitzt wird.

3. Verfahren nach einem der Ansprüche 1 oder 2, dadurch gekennzeichnet, daß als Alkalialuminiumsilikat Flugasche verwendet wird.

4. Verfahren nach einem der Ansprüche 1 bis 3, dadurch gekennzeichnet, daß das Gemisch in der Form einer wäßrigen Aufschlämmung des Alkalialuminiumsilikats in den Chloriden hergestellt und die Aufschlämmung dann getrocknet und danach erhitzt wird, um das flüssige Reaktionsprodukt zu bilden.

5. Verfahren nach einem der Ansprüche 1 bis 3, dadurch gekennzeichnet, daß das Gemisch in der Form einer Aufachlämmung des Alkalialuminiumsilikats in Solvay-Abfluß von der Herstellung von Natriumcarbonat aus Natriumchlorid und Calciumcarbonat hergestellt und die Aufschlämmung getrocknet und danach erhitzt wird, um das flüssige Reaktionsprodukt zu bilden.

6. Verfahren nach einem der Ansprüche 1 bis 3, dadurch gekennzeichnet, daß das Gemisch in der Form einer Aufschlämmung des Alkalialuminiumsilikats in Magnesiumchlorid-hydrat in der Form von Bittersalz hergestellt und die Aufschlämmung getrocknet und danach erhitzt wird, um das flüssige Reaktionsprodukt zu bilden.

7. Verfahren nach einem der Ansprüche 1 bis 4, dadurch gekennzeichnet, daß das hydratisierte Calciumchlorid in einer Menge von wenigstens 80%, bezogen auf das Aluminiumsilikat und berechnet als Calciumchlorid-dihydrat, verwendet wird.

**Revendications**

1. Procédé de production de chlorures de métaux alcalins, par réaction entre un aluminosilicate de métal alcalin et du chlorure de calcium et/ou de magnésium, procédé caractérisé en ce que l'on commence par préparer un mélange de l'aluminosilicate à l'état finement divisé et de chlorure de calcium et/ou de magnésium hydraté, avec une moindre proportion de chlorure de sodium par rapport au chlorure de calcium et/ou de magnésium, on chauffe ce mélange entre 700 et 1050°C pendant une durée de 0,3 à 2 heures pour transformer l'aluminosilicate en un produit de réaction liquide à partir duquel un verre peut être obtenu par refroidissement, pui on refroidit le produit réactionnel et on le lessive à l'eau (lixiviation) pour obtenir une solution aqueuse du chlorure de métal alcalin.

2. Procédé selon la revendication 1, caractérisé en outre en ce que le mélange est chauffé à une température inférieure à celle à laquelle il se produit une volatilisation notable du chlorure de métal alcalin que l'on veut obtenir.

3. Procédé selon la revendication 1 ou 2, caractérisé en ce que l'aluminosilicate de métal alcalin est une cendre volante.

4. Procédé selon l'une quelconque des revendications 1 à 3, caractérisé en ce que le mélange est préparé sous la forme d'une bouillie aqueuse de l'aluminosilicate de métal alcalin dans les chlorures, bouillie qui est séchée puis chauffée pour obtenir le produit de réaction liquide.

5. Procédé selon l'une quelconque des revendications 1 à 3, caractérisé en ce que le mélange est préparé sous la forme d'une bouillie de l'aluminosilicate de métal alcalin dans un effluent Solvay résultant de la fabrication de carbonate de sodium à partir de chlorure de sodium et de carbonate de calcium, bouillie qui est séchée puis chauffée pour obtenir le produit de réaction liquide.

6. Procédé selon l'une quelconque des revendications 1 à 3, caractérisé en ce que le mélange est préparé sous la forme d'une bouillie de l'aluminosilicate de métal alcalin dans des eaux-mères de cristallisation de sel par évaporation, bouillie qui est séchée puis chauffée pour obtenir le produit de réaction liquide.

7. Procédé selon l'une quelconque des revendications 1 à 4, caractérisé en ce que la proportion de chlorure de calcium hydraté par rapport à l'aluminosilicate est d'au moins 80% en poids, en chlorure de calcium dihydraté.